**Europäisches Patentamt**

**European Patent Office**

**Office européen des brevets**

(19)

(11) Veröffentlichungsnummer: **0 215 938 B1**

(12)

# EUROPÄISCHE PATENTSCHRIFT

(45) Veröffentlichungstag der Patentschrift: **14.06.89**

(21) Anmeldenummer: **86902386.1**

(22) Anmeldetag: **27.03.86**

(86) Internationale Anmeldenummer: **PCT/EP 86/00191**

(87) Internationale Veröffentlichungsnummer: **WO 86/05755 (09.10.86 Gazette 86/22)**

(51) Int. Cl.⁴: **B 62 M 3/04**, B 62 M 1/02

(54) **TRETKURBEL SOWIE TRETKURBELANTRIEB FÜR FAHRRÄDER ODER DERGLEICHEN UND HALTERUNG FÜR EINEN SOLCHEN TRETKURBELANTRIEB.**

(30) Priorität: **29.03.85 DE 3511482**
**29.03.85 DE 3511502**

(43) Veröffentlichungstag der Anmeldung:
**01.04.87 Patentblatt 87/14**

(45) Bekanntmachung des Hinweises auf die Patenterteilung:
**14.06.89 Patentblatt 89/24**

(84) Benannte Vertragsstaaten:
**AT BE CH DE FR GB IT LI LU NL SE**

(56) Entgegenhaltungen:
**BE-A- 349 753**
**CH-A- 186 431**
**FR-A- 907 486**
**FR-A- 978 498**
**FR-E- 34 293**

(73) Patentinhaber: **Stuckenbrok, Freder, Rönnelstrasse 87, D-2933 Jade 2 (DE)**

(72) Erfinder: **Stuckenbrok, Freder, Rönnelstrasse 87, D-2933 Jade 2 (DE)**

(74) Vertreter: **Eisenführ & Speiser, Martinistrasse 24, D-2800 Bremen 1 (DE)**

ACTORUM AG

## Beschreibung

Die Erfindung betrifft eine Tretkurbel für einen Tretkurbelantrieb für Fahrräder oder dergleichen, bestehend aus einem Kurbelarm und einem Pedalträgerarm, die mittels eines am Pedalträgerarm angeordneten Steuerzapfens zur Verstellung der wirksamen Tretkurbellänge im Verlaufe des Trethubes gegeneinander verschiebbar sind, welcher Kurbelarm aus einem im wesentlichen U-förmigen Grundprofil mit in beiden Schenkeln innen angeordneten Kugellaufbahnen besteht, welcher Pedalträgerarm an zwei einander gegenüberliegenden Seiten mit Kugellaufbahnen versehen ist, und mit entsprechender Kugelfüllung in dem Kurbelarm verschiebbar gelagert ist, und wobei die offenen Flächen des Kurbelarmes durch Abdeckmittel verschlossen sind. Ein solcher Tretkurbelantrieb ist schon aus der BE-A-349 753 bekannt.

Aus der CH-A-224 823, der EP-A 93 201, der DE-C-94 796 und der FR-A-973 667 sind bereits Antriebsvorrichtungen für Fahrräder oder dergleichen bekannt, bei denen die Tretkurbellänge über einen Steuerzapfen derart verändert wird, daß sich beim Abwärtsbewegen ein vergrößerter und beim Aufwärtsbewegen ein verkürzter Hebelarm ergibt. Obwohl solche Tretkurbeltriebe in den vergangenen Jahrzehnten bereits mehrfach vorgeschlagen worden sind, haben sich diese Antriebserleichterungen bisher nicht durchsetzen können, wobei der Grund wohl darin gelegen haben mag, daß diese Antriebe und die entsprechenden Tretkurbeln verhältnismäßig schwer und aufwendig gebaut werden mußten, damit die Einzelteile der Tretkurbeln den auftretenden hohen Belastungen ohne zu hohen Verschleiß standhielten. Eine solche Bauweise verunzierte jedoch die Fahrräder, so daß der Markt diese Lösungen nicht angenommen hat.

Die bei den bekannten Konstruktionen auftretenden Kräfte in der Tretkurbel waren dabei so hoch, daß dies zu einer erheblichen Schwergängigkeit des Antriebes führte, so daß der durch Verstellung des Hebelarms erzielte Gewinn an Leichtgängigkeit durch Reibung wieder aufgezehrt wurde. Es kommt hinzu, daß bei der Übertragung der Steuerbewegung auf den Steuerzapfen der Tretkurbel auf Letzteren starke Torsionskräfte einwirken, die von der Linearführung zwischen Kurbelarm und Pedalträgerarm der Tretkurbel aufgefangen werden müssen. Die Linearführung muß aus diesem Grunde nicht nur zur Aufnahme der Kippkräfte zwischen Pedalträgerarm und Kurbelarm durch das Antriebsmoment, sondern auch zur Aufnahme der auf den Steuerzapfen einwirkenden Torsionskräfte ausgelegt sein, was einen sehr stabilen und damit, wie bisher notwendig, schweren Aufbau erfordert.

Der vorliegenden Erfindung liegt die Aufgabe zugrunde, eine Tretkurbel für einen Tretkurbelantrieb für Fahrräder oder dergleichen vorzuschlagen, die auf einfache Weise aus kostengünstigen Materialien herstellbar sind, einen robusten und dennoch leichten Aufbau ermöglicht und dabei einen leichtgängigen Betrieb gewährleistet.

Diese Aufgabe wird erfindungsgemäß dadurch gelöst, daß das Grundprofil des Kurbelarms an den Außenseiten der U-Schenkel über die gesamte Länge durchgehende Längsnuten aufweist und das Abdeckprofil profilmäßig durchgehend im wesentlichen U-förmig mit herumgezogenen Schenkeln ausgebildet ist; daß das Abdeckprofil mit seinen Schenkeln in die Längsnuten des Grundprofils eingesetzt, auf das Grundprofil in Längsrichtung aufgeschoben und beide Teile unlösbar miteinander verbunden sind; daß das Abdeckprofil an der Seite des Kurbelarms mit einem Langloch zum Herausführen des Steuerzapfens versehen ist und daß die Enden des Kurbelarms durch Endkappen verschlossen sind.

Diese Bauweise hat den Vorteil, daß zum größten Teil preiswertes Profilmaterial verwendet werden kann, was zu einer erheblichen Herstellkostenersparnis bei dennoch guter Qualität führt.

Nach Herstellung der unlösbaren Verbindung zwischen dem Grundprofil und Abdeckprofil entsteht ein kastenförmiger Kurbelarm mit ausserordentlich hoher Stabilität. Diese Bauweise hat den weiteren Vorteil, daß alle Profile des Kurbelarms als Meterware bezogen werden können, ohne daß nach dem Abschneiden auf Maß noch wesentliche Bearbeitungsvorgänge erforderlich sind.

Zur Übertragung der Drehkräfte auf die Drehkurbelachse ist eine Tretkurbelnuß erforderlich, die gemäß einer zweckmäßigen Ausgestaltung der Erfindung an der Außenseite des Abdeckprofils angeschweißt oder angelötet ist.

Als Abdichtung des aus dem Kurbelarm herausgeführten Pedalträgerarms ist gemäß einer vorteilhaften Ausgestaltung der Erfindung eine Dichtkappe vorgesehen, deren Abdichtbereich auf das zum Pedalträgerarm zeigende Ende des Grundprofils aufschiebbar ist, weiterhin ist eine Lasche der Dichtkappe in einer weiteren Längsnut des Grundprofils um dieses herumgeführt und am anderen Ende mit einer Abwinklung versehen, an die ein das andere Ende des Grundprofils abdichtender Deckel anschraubbar ist. Diese Maßnahmen unterstützen das Ziel, an dem in Meterware beziehbaren Grundprofil nach dem Ablängen im wesentlichen keine weiteren Bearbeitungsvorgänge vornehmen zu müssen. Zur Verbesserung der Abdichtung der Tretkurbel ist die Öffnung des Abdichtbereiches der Dichtkappe zweckmäßigerweise dem Profil des Pedalträgerarms angepaßt und mit einer Dichtung versehen.

Um die Leichtgängigkeit der Kugelführung zwischen dem Kurbelarm und dem Pedalträgerarm zu verbessern, und um insbesondere Blockierungen durch ein Wandern der Kugel infolge der Kurbelbewegung zu vermeiden, ist eine besonders zweckmäßige Ausführungsform dadurch gekennzeichnet, daß die zwischen den Kugellaufbahnen des Kurbelarms und des Pedalträgerarms angeordneten Kugeln mittels eines Kugelkäfigs in Längsrichtung der Tretkurbel geführt sind und daß der Kugelkäfig durch eine Fixiervorrichtung in einem bestimmten Bereich der Kugellaufbahnen gehalten wird. Zur Steuerung des Kugelkäfigs ist eine zweckmäßige Ausgestaltung der Erfindung dadurch gekennzeichnet, daß der Kugelkäfig sich über je eine Druckfeder zwischen zwei Endanschlägen am Pedalträgerarm abstützt und eine den verschiedenen Auszügen des Pedalträgerarms aufgrund der auftretenden Federkräfte entsprechende Gleichgewichtslage einnimmt. Dies läßt sich gemäß einer weiteren Ausführungsform auf einfache Weise dadurch gestalten, daß der Pedalträgerarm mit einer als Sackloch ausgebildeten Längsbohrung versehen ist, die mit einem Längsschlitz und am anderen Ende mit einem Verschlußstück versehen ist, daß in dieser Längsbohrung zwischen zwei Druckfedern ein Führungsstift gelagert ist und daß ein an dem Führungsstift angeordneter Führungszapfen durch den Längsschlitz in eine Ausnehmung am Kugelkäfig eingreift.

Eine Abdichtung des aus dem Kurbelarm herausgeführten Steuerzapfens erfolgt zweckmäßigerweise dadurch, daß das Langloch im Abdeckprofil von innen durch mindestens eine mit einem Langloch versehene, verschiebbare Dichtlamelle abgedichtet ist, die zwischen dem Abdeckprofil und einem Absatz des Grundprofils und dem Pedalträgerarm angeordnet ist. Um mit möglichst wenigen Dichtlamellen, insbesondere nur einer einzigen auszukommen, ist eine besonders vorteilhafte Ausführungsform dadurch gekennzeichnet, daß die zum Langloch im Abdeckprofil zeigende Fläche des Pedalträgerarms als ebene Fläche in der gleichen Höhe wie der Absatz des Grundprofils liegt und zusammen mit diesem eine Abdichtfläche für die Dichtlamelle bildet. Dadurch, daß der Innenraum im Abdeckprofil unter der Tretkurbelnuß freigehalten ist, kann sich die Dichtlamelle bis in diesen Bereich unter der Tretkurbelnuß erstrecken, so daß ein sehr großer Abdeckbereich zwischen Pedalträgerarm und Dichtlamelle gegeben ist.

Die vorliegende Erfindung betrifft auch einen Tretkurbeltrieb, der besonders vorteilhaft in Verbindung mit den vorstehend beschriebenen Tretkurbeln angewandt werden kann, sowie eine Halterung für den erfindungsgemäßen Tretkurbeltrieb.

Aus der CH-PS 224 823 und der EP-A 93 201 sind bereits Antriebsvorrichtungen für Fahrräder oder dergleichen bekannt, bei denen die Tretkurbellänge über einen Steuerzapfen derart verändert wird, daß sich beim Abwärtsbewegen ein vergrößerter und beim Aufwärtsbewegen ein verkürzter Hebelarm ergibt.

Die Steuerung des Steuerzapfens erfolgt dabei über eine Kulissenführung, deren Form das Verstellverhalten des Hebelarms der Kurbelachse prägt. Diese bekannte Antriebsvorrichtung mit einer Kulissenführung hat den Nachteil, daß zwischen dem den Steuerzapfen betätigenden Abtastelement und der Führungsbahn erhebliche Reibungskräfte auftreten, die zu einer derartigen Schwergängigkeit des Antriebs führen, daß der durch die Verstellung des Hebelarms erzielte Gewinn an Leichtgängigkeit durch Reibung wieder aufgezehrt wird. Darüber hinaus ist eine solche Kulissenführung schwer gegen Staubeinfluß abzudichten, was jedoch für einen robusten Betrieb eines Fahrrades unerläßlich ist.

Schließlich wirken bei der Übertragung der Steuerbewegung von dem Abtastelement in der Kulissenführung auf den Steuerzapfen der Tretkurbel auf Letztere starke Torsionskräfte ein, die von der Linearführung zwischen Kurbelarm und Pedalträgerarm der Tretkurbel aufgefangen werden müßen. Die Linearführung muß aus diesem Grunde nicht nur zur Aufnahme der Kippkräfte zwischen Pedalträgerarm und Kurbelarm durch das Antriebsdrehmoment, sondern auch zur Aufnahme der auf den Steuerzapfen einwirkenden Torsionskräfte ausgelegt sein, was einen sehr stabilen und damit schweren Aufbau erfordert.

Aus der FR-PS 973 667 ist zwar ein Tretkurbeltrieb mit einer exzentrisch zur Tretkurbelachse angeordneten Lageranordnung bekannt, mit der für den Steuerzapfen der Tretkurbel eine exzentrische Bahn erzeugt werden kann, zur Aufnahme der durch die Torsion erzeugten Kippkräfte ist diese Lösung jedoch nicht geeignet.

Der vorliegenden Erfindung liegt die Aufgabe zugrunde, einen Tretkurbeltrieb für Fahrräder oder dergleichen vorzuschlagen, mit dem die in den Tretkurbeln auftretenden Torsionskräfte dadurch reduziert werden, daß ein Teil durch das Exzenterlager aufgenommen wird, um auf diese Weise zu einem robusten Aufbau und leichten Lauf zu kommen.

Diese Aufgabe wird erfindungsgemäß dadurch gelöst, daß die Lageranordnung aus mindestens drei auf dem drehbaren Lagerteil gelagerten Lagerrollen besteht, die radial auf einer Lagerbahn des feststehenden Lagerteils abrollen, und daß der Steuerzapfen an dem Kurbelarm angeordnet und in einer auf dem drehbaren Lagerteil angeordneten Lagerbuchse im Freiraum zwischen den Lagerrollen etwa in der gleichen Ebene gelagert ist.

Ein solcher Tretkurbeltrieb hat den Vorteil, daß sich der Steuerzapfen in seiner Lagerung auf den drehbaren Lagerteil abstützt, so daß auf ihn und damit auf die Lagerung in der Tretkurbel nur geringe Torsionsmomente wirken. Auf diese Weise ist es möglich, den Aufbau der Tretkurbel selbst einfacher und leichter zu gestalten.

Eine solche Lösung hat den Vorteil, daß zwischen den Lagerrollen in der gleichen Ebene ein Freiraum zur Verfügung steht, in dem gemäß einer weiteren Ausgestaltung der Erfindung der Steuerzapfen in einer auf dem drehbaren Lagerteil angeordneten Lagerbuchse gelagert werden kann. Diese Anordnung der Lagerbuchse für den Steuerzapfen in der gleichen Ebene zwischen den Lagerrollen führt zu einer weiteren Verminderung des auf den Steuerzapfen ausgeübten Torsionsmomentes, so daß sowohl in der Lagerung des Steuerzapfens als auch in der Linearführung der Tretkurbel geringere Druck- und damit Reibungskräfte auftreten, so daß ein außerordentlich leichtgängiger Tretkurbeltrieb ermöglicht wird.

Die Lageranordnung mit mindestens drei Lagerrollen ist vorzugsweise derart ausgebildet, daß das feststehende Lagerteil mit einer äußeren nutförmigen Lagerbahn versehen ist, in die die Lagerrollen von außen eingreifen und auf dieser abrollen. Das feststehende Lagerteil und das drehbare Lagerteil sind auf einfache Weise gegeneinander staubdicht abzudichten, was bei einer Kulissenführung wesentlich aufwendiger wäre. Vor allem ist es bei dem erfindungsgemäßen Tretkurbeltrieb möglich, daß der Steuerzapfen in dem drehbaren Lagerteil der Lageranordnung um seine Achse drehbar, in allen anderen Ebenen jedoch abgestützt ist, so daß kaum Torsionskräfte auf die Tretkurbel übertragen werden.

Um das Leistungsverhalten des Tretkurbeltriebes den Wünschen des Benutzers anpassen zu können, sind gemäß einer weiteren vorteilhaften Ausgestaltung der Erfindung im Pedalträgerarm mehrere Bohrungen in verschiedenen Abständen von der Pedalachse angeordnet, in die der Steuerzapfen wahlweise zur Auswahl des Leistungsverhaltens einschraubbar ist.

Der erfindungsgemäße Aufbau des Tretkurbeltriebes ermöglicht auch eine sehr einfache und stabile Halterung zur Befestigung der Lageranordnungen zweier Tretkurbeltriebe zu beiden Seiten des Tretlagers eines Fahrradrahmens oder dergleichen. Eine solche Halterung ist gekennzeichnet, durch zwei an den feststehenden Lagerteilen der Lageranordnungen befestigte Trägerscheiben mit je einer Ausnehmung, die formschlüssig auf beide Enden des Tretlagerrohrs zur Fixierung in radialer Richtung aufgesteckt sind; und eine an dem Rahmen und an den beiden Trägerscheiben befestigte Schellenanordnung zur axialen Fixierung der Trägerscheiben. Mit einer solchen Halterung können die Tretkurbeltriebe an einem serienmäßigen Fahrrad oder dergleichen auf einfache Weise befestigt oder nachgerüstet werden, ohne daß an dem Fahrrad größere Veränderungen vorgenommen werden müssen. Auf diese Weise ist es möglich, Fahrräder entweder in Normalausführung oder in der Ausführung mit dem erfindungsgemäßen Tretkurbeltrieb auszurüsten, ohne dabei große vorbereitende Änderungen an der Standardausführung des Fahrrades vornehmen zu müssen.

Eine solche Halterung ist vorzugsweise derart ausgebildet, daß die Schellenanordnung aus einem mit einem Befestigungsblech für eine Fahrradstütze verschraubten ersten Teil mit einem Stehbolzen sowie einem über ein Langloch an dem Stehbolzen mit dem ersten Teil verschraubten zweiten Teil besteht, an dem die beiden Trägerscheiben für die Halterung der Lageranordnungen befestigt sind. Zweckmäßigerweise ist eine der beiden Trägerscheiben als das innere Teil eines Kettenschutzkastens ausgebildet, mit dem der äußere Teil des Kettenschutzkastens verschraubt ist und die Lageranordnung dieser Seite trägt. Hierdurch wird der Kettenschutzkasten in die tragende Halterung für den Tretkurbeltrieb einbezogen, was zu einer sehr stabilen Befestigung bei dennoch zierlichem Aussehen führt. Die Schellenanordnung weist vorzugsweise mehrere das Kettenrad umgreifende Haltearme auf, an denen das äußere Teil des Kettenschutzkastens sowie die Lageranordnung dieser Seite befestigt sind.

Die Erfindung wird nachfolgend anhand von Ausführungsbeispielen unter Bezug auf die beigefügten Zeichnungen näher erläutert. Es zeigen:

Fig. 1 eine perspektivische Ansicht einer kompletten Tretkurbel gemäß der Erfindung;

Fig. 2 den Tretkurbelarm der Tretkurbel nach Fig. 1 im auseinandergebauten Zustand;

Fig. 3 einen Querschnitt durch die Tretkurbel nach Fig. 1, wobei die einzelnen Teile der Übersichtlichkeit halber mit deutlichem Spiel gezeichnet sind;

Fig. 4 eine perspektivische Ansicht eines Abdeckprofils für die Tretkurbel nach Fig. 1;

Fig. 5 eine perspektivische Ansicht eines Pedalträgerarms der Tretkurbel nach Fig. 1 im auseinandergezogenen Zustand der Einzelteile;

Fig. 6 die Tretkurbel nach Fig. 1, teilweise geschnitten, zur Darstellung der Kugelführung in drei verschiedenen Stellungen des Pedalträgerarms;

Fig. 7 Darstellungen ähnlich der Fig. 6 zur Erläuterung der verschiedenen Stellungen der Dichtlamelle, wobei der Übersichtlichkeit halber Kugeln und Kugelkäfig fortgelassen sind;

Fig. 8 eine Draufsicht auf den Tretkurbelarm in ähnlichen Stellungen wie in Fig. 7 zur Erläuterung der verschiedenen Positionen der Dichtlamelle;

Fig. 9 eine perspektivische Ansicht der Zuordnung der einzelnen Teile des erfindungsgemäßen Tretkurbeltriebes in auseinandergezogener Darstellung;

Fig. 10 eine perspektivische Ansicht einer Schellenanordnung in auseinandergezogener Darstellung;

Fig.11 ein schematisches Bewegungsdiagramm des erfindungsgemäßen Tretkurbeltriebes in vier verschiedenen Stellungen A, B, C und D;

Fig. 12 eine Seitenansicht, teilweise geschnitten, einer bevorzugten Lageranordnung;

Fig. 13 einen Schnitt durch die Anordnung nach Fig. 12 und

Fig. 14 eine perspektivische Darstellung der verschiedenen Befestigungsmittel einer Halterung des erfindungsgemäßen Tretkurbeltriebes am Fahrradrahmen in auseinandergezogener Darstellung.

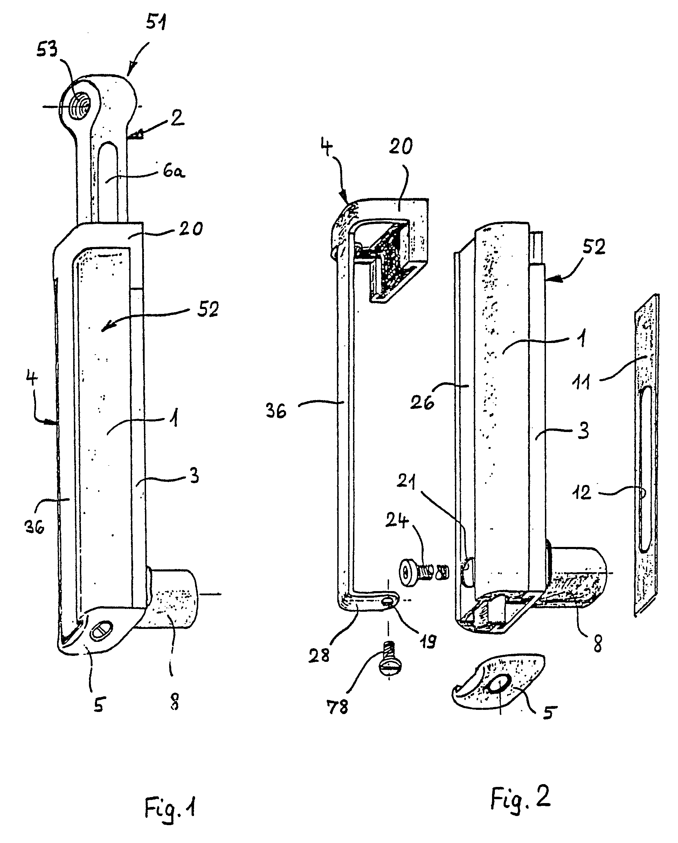

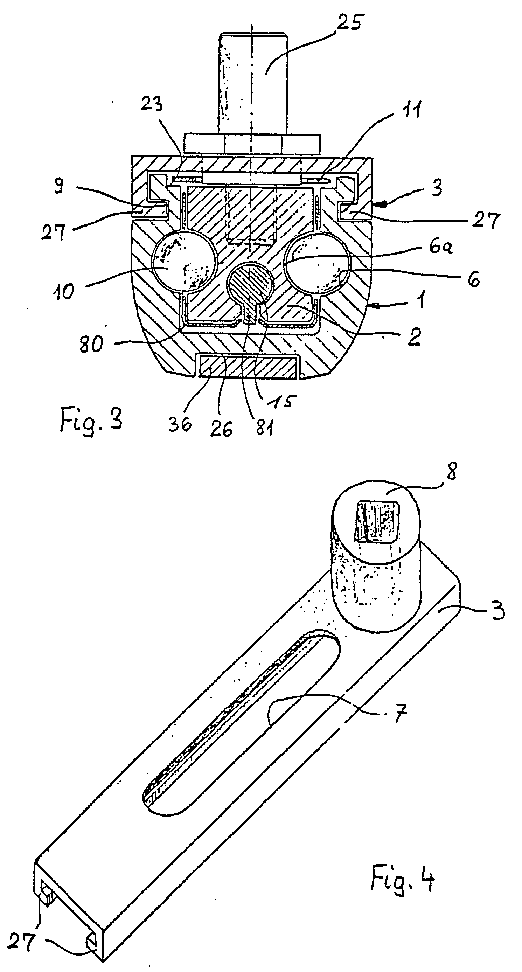

Die in den Fig. 1 bis 3 gezeigte Tretkurbel 51 besteht aus einem Kurbelarm 52 und einem darin verschiebbar gelagerten Pedalträgerarm 2. Die Tretkurbel 51 ist mit einer Tretkurbelnuß 8 mittels eines Innenvierkantprofils (siehe Fig. 4) auf ein Vierkantprofil einer (nicht gezeigten) Tretkurbelachse eines Fahrrades aufsteckbar und mit dieser verschraubbar. Am Ende des Pedalträgerarms 2 ist eine Gewindebohrung 53 vorgesehen, in die eine Achse einer Pedale einschraubbar ist. Das Bezugszeichen 53 wird nachfolgend mit Pedalachse bezeichnet. Der Pedalträgerarm 2 ist gegenüber dem Kurbelarm 52 in Längsrichtung verschiebbar, um bei der Abwärtsbewegung des Trethubes einen längeren Hebelarm (zwischen der Pedalachse 53 und der Tretkurbelnuß 8) zwecks Erhöhung des Drehmoments zu bewirken, während bei der Aufwärtsbewegung der Tretkurbel 51 der Hebelarm verringert wird, um beim Treten nicht so weit ausholen zu müssen.

Der Kurbelarm 52 besteht aus einem Grundprofil 1, das einen im wesentlichen U-förmigen Querschnitt hat. Auf der Innenseite des Grundprofils 1 sind einander gegenüberliegende Kugellaufbahnen 6 vorgesehen. Der Pedalträgerarm 2 ist zwischen den beiden Schenkeln des Grundprofils 1 angeordnet und weist auf einander gegenüberliegenden Seiten ebenfalls halbkreisförmige Kugellaufbahnen 6a auf. Zwischen diesen Kugellaufbahnen 6 und 6a sind Kugeln 10 angeordnet, die durch einen Kugelkäfig 80 in einer bestimmten Lage in Längsrichtung der Tretkurbel gehalten werden.

Das (in Fig. 3 gesehen) nach oben offene Grundprofil 1 wird durch ein Abdeckprofil 3 verschlossen, und zwar auf die Weise, daß das Grundprofil über die gesamte Länge in beiden Schenkeln mit Längsnuten 9 versehen ist, in die entsprechend herumgezogene Schenkel 27 des Abdeckprofils 3 von beiden Seiten eingreifen. Das Abdeckprofil 3 (siehe auch Fig. 4) ist hierzu im wesentlichen U-förmig im Querschnitt aufgebaut, wobei sich die bereits erwähnten Schenkel 27 in Fortsetzung der U-Schenkel befinden. Auf diese Weise ist es möglich, das Abdeckprofil 3 auf das Grundprofil 1 aufzuschieben auf stabile Weise miteinander zu verbinden. Dieser Verbund kann dadurch noch verbessert werden, daß beide Teile unlösbar miteinander verbunden, z.B. verschweißt, verlötet oder verklebt werden, um auf diese Weise eine außerordentlich stabile Kastenträgerkonstruktion zu bilden. Das Grundprofil 1, das Abdeckprofil 3 und der Pedalträgerarm 2 können aus gezogenem Material als Meterware bestehen, von dem entsprechende Stücke abgeschnitten werden.

In dem Abdeckprofil 3 ist ein Langloch 7 vorgesehen, durch das ein Steuerzapfen 25 (Fig. 3) hindurchgeführt und mit dem Pedalträgerarm 2 verschraubt ist. Dieser Steuerzapfen 25 dient zur Verschiebung des Pedalträgerarms 2 gegenüber dem Kurbelarm 52 zwecks Veränderung des Hebelarmes zwischen der Pedalachse 53 und der Tretkurbelnuß 8. Die Steuerung des Steuerzapfens 25 wird hier nicht näher beschrieben, weil diese nicht zur vorliegenden Erfindung gehört.

Das Grundprofil 1 weist auf seiner geschlossenen Seite eine Längsnut 26 auf, die zur Aufnahme einer Lasche 36 einer Dichtkappe 4 dient. Diese Dichtkappe 4 weist am Pedalende einen Abdichtbereich 20 auf, aus dem der Pedalträgerarm 2 herausgeführt ist und der eine Öffnung mit einem Profil entsprechend dem Profil des Pedalträgerarms 2 aufweist. Zusätzlich ist in dieser Öffnung noch eine (nicht gezeigte) Dichtung vorhanden. Der Endbereich 20 weist weiter ein Profilstück ähnlich dem Profil des Abdeckprofils 3 auf, das in die entsprechenden Längsnuten 9 des Grundprofils 1 eingeschoben werden kann. Nach dem Aufschieben des Abdichtbereiches 20 auf das Grundprofil 1 ist dieses einwandfrei abgeschlossen, ohne daß besondere Schraubverbindungen erforderlich wären. Die Dichtkappe 4 ist an ihrem anderen Ende in Verlängerung der Lasche 36 mit einer Abwinkelung 28 versehen, die beim Aufschieben des Abdichtbereiches 20 auf das Grundprofil 1 etwas angehoben werden muß. Nach vollständigem Aufschieben der Dichtkappe 4 umfaßt die Abwinkelung 28 das Grundprofil. Danach wird ein Deckel 5 durch eine Schraube 78 in einer Gewindebohrung 19 in der Abwinkelung 28 festgeschraubt. Durch diesen Deckel 5 wird das andere Ende des Kurbelarms 52 verschlossen.

Die Tretkurbelnuß 8 ist an der Außenfläche des Abdeckprofils 3 durch Schweißen oder dergleichen befestigt. Somit kann das Grundprofil 1 als Profilmaterial im wesentlichen vorgefertigt werden, ohne daß eine nachträgliche Bearbeitung erforderlich ist. In dem Grundprofil 1 ist ein Schraubenloch 21 vorgesehen, durch die eine Verbundschraube 24 hindurchgeführt und in das Ende einer (nicht gezeigten) Tretkurbelachse zwecks Befestigung der Tretkurbelnuß 8 eingeschraubt werden kann. Dieses Schraubenloch 21 wird durch die Lasche 36 abgedeckt.

Um während der vollen Umdrehung der Tretkurbel 51 eine leichtgängige Verschiebung des Pedalträgerarms 2 gegenüber dem Kurbelarm 52 zu gewährleisten, ist es erforderlich, daß die Kugeln 10 in ihren Kugellaufbahnen 6, 6a bei Belastung frei rollen können. Da die Druckbelastung während der Rotation der Tretkurbel 51 jedoch nicht gleichbleibend ist — sie tritt im wesentlichen nur während der Abwärtsbewegung der Tretkurbel 51 auf — führen die Kugeln 10 nicht nur eine reine Rollbewegung aus, sondern haben durch ihr Eigengewicht sowie durch die Fliehkraft die Tendenz, ihre Lage über die Rollbewegung hinaus zu verändern. Sie würden vom Drehpunkt der Tretkurbel 51 nach außen wandern, nach einigen Umdrehungen den äußeren Endpunkt in den Kugellaufbahnen 6, 6a erreicht haben und beim nächsten Krafthub eine weitere Schubbewegung völlig blockieren, bevor der Pedalträgerarm 2 gegenüber dem Kurbelarm 52 in die äußere Endstellung verschoben worden ist, wenn nicht besondere Vorkehrungen getroffen worden wären, die das Wandern der Kugeln über mehrere Umdrehungen der Tretkurbel 51 verhinderten. Diese Blockierungsgefahr wird noch vergrößert durch die auf die Tretkurbel wegen der versetzten Krafteinwirkung von den Pedalen einwirkenden Torsionskräfte.

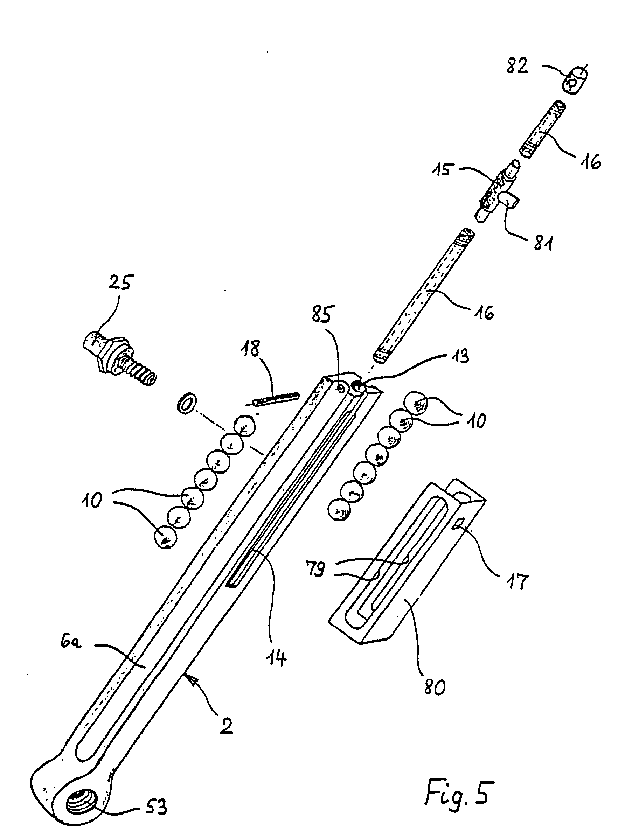

Fig. 5 zeigt nun die Anordnung der verschiedenen Teile zur Verhinderung solcher Blockierungen. Die zwischen den Kugellaufbahnen 6, 6a laufenden Kugeln 10 sind in Langlöchern 79 eines Kugelkäfigs 80 angeordnet. Der Pedalträgerarm 2 ist mit einer Längsbohrung 13 versehen, die über einen seitlich angebrachten Schlitz 14 zur Seite hin offen ist. Diese Längsbohrung 13 ist als Sackloch ausgebildet, in das eine erste Feder 16, ein Führungsstift 15 und eine zweite Feder 16 eingesteckt sind. Die Längsbohrung 13 ist dann durch ein Verschlußstück 82 durch Einstecken eines Stiftes 18 in eine Querbohrung 85 verschlossen. Der Führungsstift 15 trägt seitlich einen Führungszapfen 81, der aus dem Längsschlitz 14 herausgeführt ist und in eine Ausnehmung 17 im Kugelkäfig 80 eingreift. Durch die Stellung des Führungsstiftes 15 wird also die Lage des Kugelkäfigs 80 in Längsrichtung festgelegt (siehe hierzu auch Fig. 3).

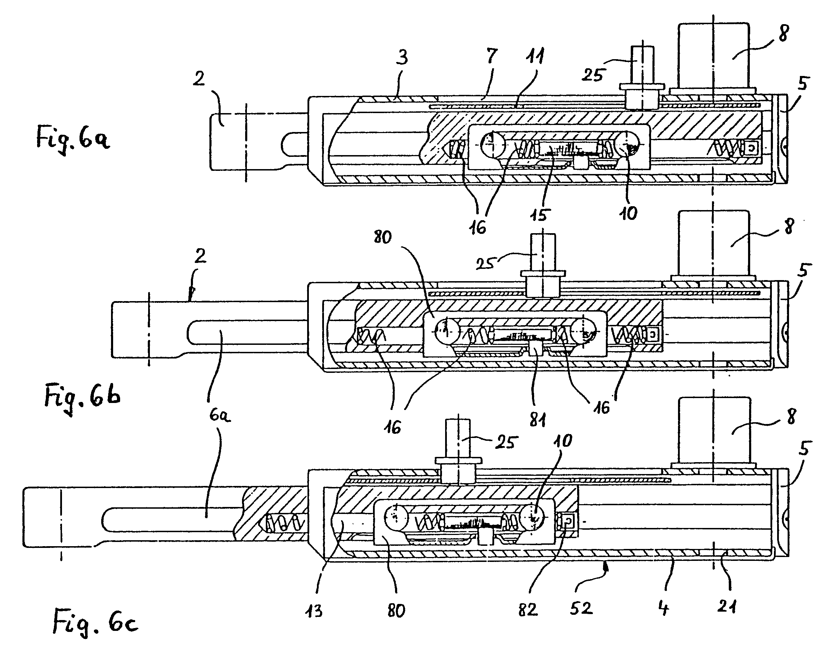

Die Fig. 6a bis 6c zeigen die einzelnen Positionen des Kugelkäfigs 80 bei verschiedenen Positionen des Pedalträgerarms 2 gegenüber dem Kurbelarm 52. Im eingefahrenen Zustand des Pedalträgerarms 2 (Fig. 6a) befindet sich der Kugelkäfig 80 mit den Kugeln 10 in einer Anfangsposition, die im unbelasteten Zustand des Lagers durch das Gleichgewicht der Federkräfte der Federn 16 zu beiden Seiten des Führungsstiftes 15 bestimmt ist. Wird nun der Pedalträgerarm 2 unter Belastung des Lagers gegenüber dem Kurbelarm 52 nach außen geschoben (Fig. 6b), so rollen die Kugeln 10 auf den Kugellaufbahnen 6, 6a ab und nehmen den Kugelkäfig 80 einschließlich Führungszapfen 81 und Führungsstift 15 mit. Die (in den Fig. 6a - 6c) rechte Feder 16 wird hierbei zusammengedrückt und die linke Feder 16 entlastet. Ein weiteres Verschieben des Pedalträgerarms 2 unter Last in die äußere Endlage (Fig. 6c) führt unter weiterem Abrollen der Kugeln 10 zu einem weiteren Spannen der rechten Feder 16.

Sobald im gespannten Zustand einer der Federn 16 die Last vom Pedalträgerarm 2 fortfällt, z.B. im unteren Totpunkt der Kurbelbewegung, entfällt auch die Belastung der Kugeln 10 in den Kugellaufbahnen 6, 6a, so daß die gespannte Feder 16 den Kugelkäfig 80 mit den Kugeln 10 gegenüber dem Pedalträgerarm 2 wieder in die entspannte Gleichgewichtslage zurückbringt. Durch diese vorteilhafte Kugelfixierung wird also erreicht, daß der Kugelkäfig 80 mit den Kugeln 10 bei Entlastungen ständig in die Anfangsposition zurückgebracht wird und somit Blockierungen sicher vermieden werden.

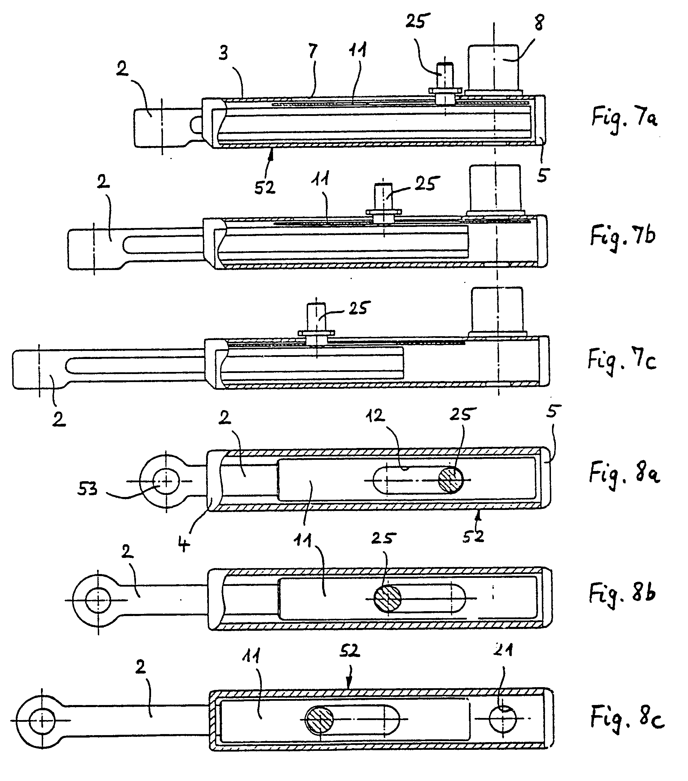

In den Fig. 7 und 8 sind nun Einzelheiten der Abdichtung des Langloches 7 im Abdeckprofil 3 nach außen gezeigt. Wie auch in Fig. 3 zu sehen, ist zwischen einem Absatz 23 des Grundprofils 1 und der (in Fig. 3) oberen, ebenen Fläche des Tretkurbelarms 2 einerseits und der inneren Fläche des Abdeckprofils 3 andererseits eine Dichtlamelle 11 vorgesehen, die ein Langloch 12 aufweist, damit der Steuerzapfen 25 herausgeführt werden kann. Wie bereits erwähnt, sind in Fig. 3 die einzelnen Teile nur der Übersichtlichkeit halber mit großem Spiel gezeichnet. Selbstverständlich liegt die Dichtlamelle 11 auf dem Absatz 23 und der oberen Fläche des Pedalträgerarms 2 auf und berührt außerdem die Innenseite des Abdeckprofils 3, um eine einwandfreie Abdichtung zu gewährleisten.

In der Stellung nach den Fig. 7a und 8a befindet sich der Pedalträgerarm 2 im eingefahrenen Zustand, und der aus dem Langloch 12 der Dichtlamelle 11 herausragende Steuerzapfen 25 hat diese in die äußerste (in den Fig.) rechte Position verschoben. Dadurch, daß die Tretkurbelnuß 8 mit dem Abdeckprofil 3 außen verschweißt ist, ist der darunterliegende Raum für das Verschieben der Dichtlamelle 11 frei. In dieser Position nach den Fig. 7a und 8a ist das Innere des Kurbelarms 52 nach außen hin also abgedichtet.

Nachdem der Pedalträgerarm 2 etwas nach links verschoben worden ist (siehe Fig. 7b und 8b), bleibt die Dichtlamelle 11 zunächst in ihrer ersten Position, solange der Steuerzapfen 25 noch nicht gegen das Ende des Langloches 12 anstößt. Auch in dieser Position erfolgt eine einwandfreie Abdichtung. Wird der Pedalträgerarm 2 weiter nach links bewegt, so nimmt der Steuerzapfen 25 über das Ende des Langloches 12 die Dichtlamelle 11 nach links mit und dichtet in der linken Endstellung (siehe Fig. 7c und 8c) den über dem rechten Ende des Pedalträgerarms 2 liegenden Freiraum nach oben hin zum Langloch 7 des Abdeckprofils 3 ab. Bei der Bewegung des Pedalträgerarms 2 nach rechts erfolgt die Mitnahme der Dichtlamelle 11 in umgekehrter Reihenfolge.

Somit ist eine im Verhältnis zur Gesamtlänge des Kurbelarms 52 lange Öffnung 7 durch eine einzige Dichtlamelle 11 in Verbindung mit der als ebene Fläche ausgebildeten Innenseite des Pedalträgerarms 2 ausreichend abgedichtet.

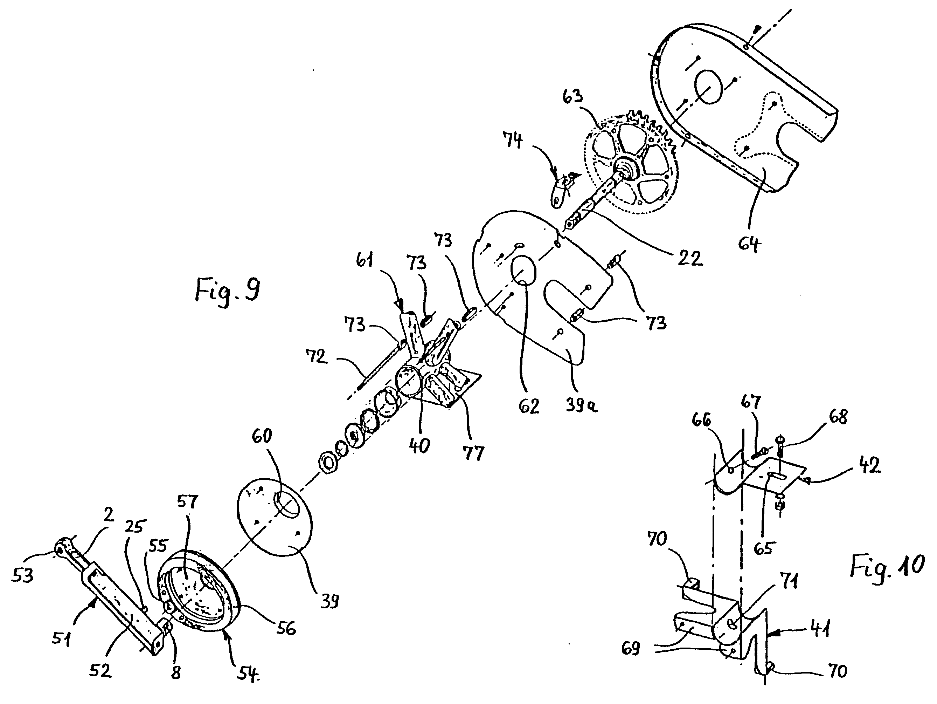

In der Darstellung nach Fig. 9 ist ein Ausschnitt aus einem Fahrradrahmen im Bereich des Tretlagers gezeigt und mit dem Bezugszeichen 61 versehen. An diesem Rahmen 61 ist mittels einer Trägerscheibe 39 eine Lageranordnung 54 befestigt, die in Fig. 9 als Ring-Kugellager ausgebildet ist. Einzelheiten der Befestigung werden später im Detail erläutert.

Die Lageranordnung 54 hat ein feststehendes Lagerteil 57 und ein drehbares Lagerteil 56, und auf Letzterem ist eine Lagerbuchse 55 zur Aufnahme eines Steuerzapfens 25 einer Tretkurbel 51 befestigt. Die Tretkurbel 51 besteht aus einem Kurbelarm 52 und einem Pedalträgerarm 2, der an seinem Ende mit einer Gewindebohrung versehen ist, in die ein Pedal (nicht gezeigt) einschraubbar ist. Das Bezugszeichen 53 kennzeichnet hier die Pedalachse. An dem Kurbelarm 52 ist eine Tretkurbelnuß 8 angeordnet, die einen Innenvierkant aufweist, der auf einen entsprechenden Außenvierkant einer Tretkurbelachse aufsteckbar und durch Verschrauben befestigbar ist.

Dieser bisher beschriebene Tretkurbeltrieb ist (in der Zeichnung der Fig. 9) auf der linken Seite des Tretlagers angeordnet. Auf der rechten Seite (in der Zeichnung) des Tretlagers, und zwar hinter dem aus den Teilen 39a und 64 bestehenden Kettenschutzkasten, befindet sich eine ähnliche Anordnung eines Tretkurbeltriebes mit einer Lageranordnung 54 und einer Tretkurbel 51. Dieser Tretkurbeltrieb ist in der Zeichnung der Einfachheit halber jedoch nicht dargestellt; er arbeitet jedoch in der gleichen Weise.

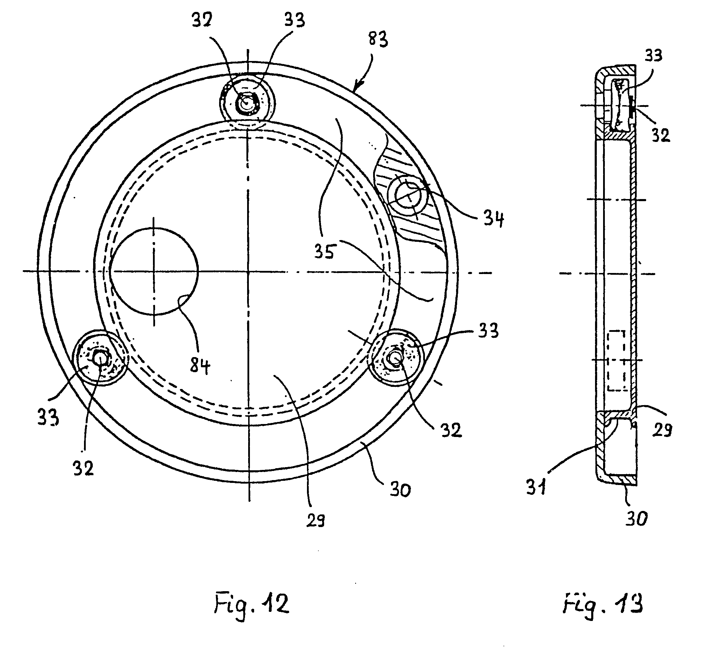

Nachfolgend soll nun die Kinematik des erfindungsgemäßen Tretkurbeltriebes unter Bezug auf die Fig. 11 beschrieben werden. In dieser Darstellung stellt das Bezugszeichen 75 den Mittelpunkt der Lageranordnung 54 dar, der gegenüber der Tretkurbelachse 22 beim Fahrrad nach vorn (in Fig. 11 nach rechts) verlagert ist. Die Lagerbuchse 55 mit dem darin gelagerten Steuerzapfen 25 beschreibt bei Drehung des drehbaren Lagerteils 56 eine Kreisbahn, die in Fig. 11 durch eine strichpunktierte Linie 76 angedeutet ist. Der Pedalträgerarm 2 wird also über den auf ihm angeordneten Steuerzapfen 25 gegenüber dem Kurbelarm 52 und damit der Tretkurbelachse 22 im Verlaufe eines Kurbelhubes verschoben, und es ergeben sich im Verlaufe einer Tretkurbelumdrehung verschiedene Hebelarme zwischen der Pedalachse und der Tretkurbelachse.

In der hinteren Position A der Tretkurbel ist der Pedalträgerarm 2 in den Kurbelarm 52 eingezogen, so daß sich nur ein kurzer Hebelarm $1_A$ ergibt. In den Zwischenstellungen B und C ist der Pedalträgerarm 2 bereits ausgefahren, so daß sich längere Hebelarme $1_B$ bzw. $1_C$ ergeben. In der Position D ist der Pedalträgerarm 2 voll ausgefahren und es ergibt sich der größte Hebelarm $1_D$.

Die Pedalachse 53 beschreibt gegenüber der Tretkurbelachse 22 eine im wesentlichen exzentrische Kreisbahn, die dazu führt, daß beim Fahren mit dem Fahrrad oder dergleichen bei der niedergehenden Bewegung der Pedale ein größerer Hebelarm zur Verfügung steht, während beim Rückholen der Pedale ein geringerer Weg beschritten werden muß.

Das Leistungsverhalten des erfindungsgemäßen Tretkurbeltriebes kann auf einfache Weise an die Bedürfnisse der Bedienungsperson angepaßt werden, wenn der Steuerzapfen 25 gegenüber dem Pedalträgerarm 2 in verschiedenen Stellungen angeordnet werden kann, was durch mehrere Bohrungen 58 (Fig. 11) erleichtert wird. Wird der Steuerzapfen 25 in die in Fig. 11 angedeutete Bohrung 58 eingeschraubt, so verlängert sich der Hebelarm der Tretkurbel um einen geringen Betrag; dieser Betrag muß jedoch auch bei der Rückholbewegung mit aufgebracht werden.

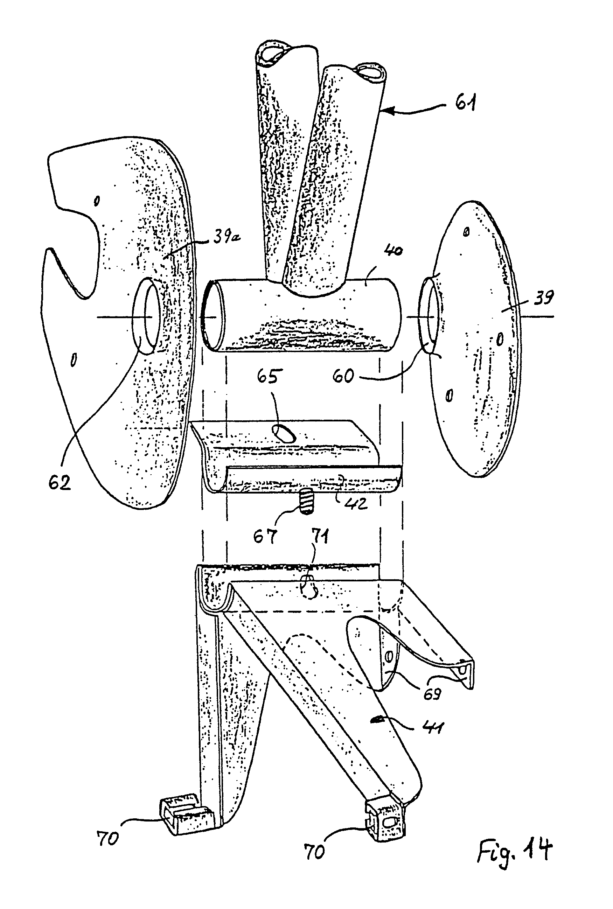

Während die in Fig. 9 dargestellte Lageranordnung 54 ein einziges Ring-Kugellager ist, zeigen die Fig. 12 und 13 eine bevorzugte Lageranordnung 83, deren Einzelheiten nachfolgend beschrieben und die anstelle der Lageranordnung 54 der Fig. 9 eingesetzt werden kann. Die Lageranordnung 83 besteht aus einem feststehenden, inneren Lagerteil 29, das mit einer Öffnung 84 über die Tretkurbelachse 22 geschoben und an dem Fahrradrahmen 61 befestigt wird. Der Mittelpunkt der Lageranordnung 83 ist dabei gegenüber der Tretkurbelachse 22 bzw. der Öffnung 84 wie in Fig. 11 versetzt. Ein drehbares Lagerteil 30 trägt auf Lagerzapfen 32 Lagerrollen 33, die auf einer ringförmigen Lagerbahn 31 des feststehenden Lagerteils 29 abrollen. Anstelle der drei Lagerrollen 33 können auch vier oder mehr Lagerrollen vorgesehen sein; es sind jedoch mindestens drei Rollen erforderlich, die gleichmäßig um den Umfang verteilt sind, um eine einwandfreie Fixierung des drehbaren Lagerteils 30 gegenüber dem feststehenden Lagerteil 29 zu gewährleisten.

Zwischen den Lagerrollen 33 sind Freiräume 35 vorhanden, in denen eine Lagerbuchse 34 zur Lagerung des Steuerzapfens 25 angeordnet ist. Diese Anordnung der Lagerbuchse und des Steuerzapfens 25 kann in etwa der gleichen Ebene wie die Lagerrollen 33 erfolgen, was zu einer wesentlich kompakteren Bauweise des Tretkurbeltriebes führt. Die Lagerrollen 33 sind vorzugsweise als auf den Lagerzapfen 32 aufgesteckte Kugellager ausgebildet.

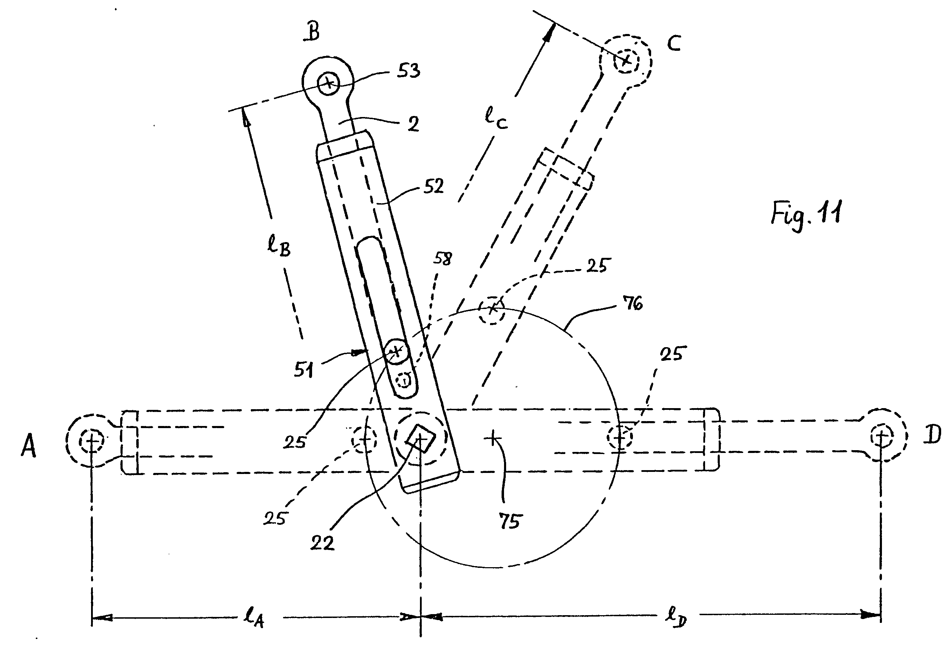

Nachfolgend soll die Befestigung des erfindungsgemäßen Tretkurbeltriebes an dem Fahrradrahmen 61 in Verbindung mit den Fig. 9, 10 und 14 beschrieben werden. Die Darstellung der Fig. 14 ist hierbei gegenüber der der Fig. 9 und 10 um etwa 180° verdreht. Fig. 10 zeigt eine Schellenanordnung mit einem ersten Teil 42 und einem zweiten Teil 41 in der Lage, wie sie unter dem Rahmenteil 61 und einem Befestigungsblech 77 für eine Fahrradstütze von unten her befestigt wird.

Zur radialen Fixierung der Lageranordnungen 54 (bzw. der Lageranordnungen 83 nach den Fig. 12 und 13) zu beiden Seiten des Rahmens 61 werden auf die beiden Enden eines Tretlagerrohrs 40 je eine Trägerscheibe 39 bzw. 39a mit einer darin befindlichen Ausnehmung 60 bzw. 62 aufgeschoben. Die Ausnehmungen 60 bzw. 62 sind umgebördelt und für einen festen Sitz auf den Enden des Tretlagerrohrs 40 angepaßt. Die für die rechte Seite (in Fig. 9) vorgesehene Trägerscheibe 39a stellt gleichzeitig einen inneren Teil eines Kettenschutzkastens dar. Zur axialen Fixierung der Lageranordnungen ist die Schellenanordnung 42, 41 vorgesehen (Fig. 10 und 14). Das erste Teil 42 der Schellenanordnung enthält einen abgerundeten Teil mit einer Bohrung 66, in die ein Stehbolzen 67 eingesetzt ist. Dieser abgerundete Teil greift unter die Rundung des Tretlagerrohrs 40, wenn dieses Schellenteil 42 mittels einer Schraube 68 und eines Langloches 65 mit dem Befestigungsblech 77 verschraubt wird. Anschließend wird das zweite Teil 41 der Schellenanordnung mit einem Langloch 71 auf den Stehbolzen 67 aufgesteckt und verschraubt. Das zweite Teil 41 der Schellenanordnung weist Befestigungswinkel 69 auf, mit denen die Trägerscheibe 39 und die Lageranordnung 54 auf der einen Seite des Rahmens 61 und der innere Teil 39a des Kettenschutzkastens verschraubt und damit axial sowie gegen Kippen fixiert werden, und zwar mittels Schrauben, einer Gewindestange 72 und Distanzstücken 73. Das zweite Teil 41 der Schellenanordnung weist darüber hinaus zwei Haltearme 70 auf, die um ein auf der Tretkurbelachse 22 aufgesetztes Kettenrad 63 herumgreifen und zur Befestigung eines äußeren Teils 64 des Kettenschutzkastens dienen. Zur weiteren Halterung wird auch ein Haltewinkel 74 verwendet.

Durch diese Konstruktion wird dem aus den beiden Teilen 39a und 64 bestehenden Kettenschutzkasten eine tragende Funktion gegeben, was die Befestigung des erfindungsgemäßen Tretkurbeltriebes außerordentlich verstärkt, ohne dabei zu einem plumpen Aussehen zu führen.

Auch wenn das erfinderische Prinzip in Verbindung mit einm Tretkurbelantrieb beschrieben und beansprucht wurde, so kann es selbstverständlich auch bei anderen Antrieben mit einer Kurbel veränderlicher Länge, z.B. bei Handkurbelantrieben, Verwendung finden.

## Patentansprüche

1. Tretkurbel für einen Tretkurbelantrieb für Fahrräder oder dergleichen, bestehend aus einem Kurbelarm und einem Pedalträgerarm, die mittels eines am Pedalträgerarm angeordneten Steuerzapfens zur Verstellung der wirksamen Tretkurbellänge im Verlaufe des Trethubes gegeneinander verschiebbar sind, welcher Kurbelarm aus einem im wesentlichen U-förmigen Grundprofil mit in beiden Schenkeln innen angeordneten Kugellaufbahnen besteht, welcher Pedalträgerarm an zwei einander gegenüberliegenden Seiten mit Kugellaufbahnen versehen ist, und mit entsprechender Kugelfüllung in dem Kurbelarm verschiebbar gelagert ist, und wobei die offenen Flächen des Kurbelarmes durch Abdeckmittel verschlossen sind, dadurch gekennzeichnet, daß das Grundprofil (1) des Kurbelarms (52) an den Außenseiten der U-Schenkel über die gesamte Länge durchgehende Längsnuten (9) aufweist und das Abdeckprofil (3) profilmäßig durchgehend im wesentlichen U-förmig mit herumgezogenen Schenkeln (27) ausgebildet ist; daß das Abdeckprofil (3) mit seinen Schenkeln (27) in die Längsnuten (9) des Grundprofils eingesetzt, auf das Grundprofil (1) in Längsrichtung aufgeschoben und beide Teile unlösbar miteinander verbunden sind; daß das Abdeckprofil (3) an der Seite des Kurbelarms (52) mit einem Langloch (7) zum Herausführen des Steuerzapfens (25) versehen ist und daß die Enden des Kurbelarms (52) durch Endkappen (5, 20) verschlossen sind.

2. Tretkurbel nach Anspruch 1, dadurch gekennzeichnet, daß an der Außenseite des Abdeckprofils (3) eine Tretkurbelnuß (8) zum Aufsetzen auf eine Tretlagerachse angeschweißt oder angelötet ist.

3. Tretkurbel nach Anspruch 1, dadurch gekennzeichnet, daß eine Dichtkappe (4) vorgesehen ist, deren Abdichtbereich (20) auf das zum Pedalträgerarm (2) zeigende Ende des Grundprofils (1) aufschiebbar ist, daß eine Lasche (36) der Dichtkappe (4) in einer weiteren Längsnut (26) des Grundprofils (1) um dieses herumgeführt und am anderen Ende mit einer Abwinkelung (28) versehen ist, an die ein das andere Ende des Grundprofils (1) abdichtender Deckel (5) anschraubbar ist.

4. Tretkurbel nach Anspruch 3, dadurch gekennzeichnet, daß die Öffnung des Abdichtbereiches (20) der Dichtkappe (4) dem Profil des Pedalträgerarms (2) angepaßt und mit einer Dichtung versehen ist.

5. Tretkurbel nach einem oder mehreren der vorstehenden Ansprüche, dadurch gekennzeichnet, daß das Langloch (7) im Abdeckprofil (3) von innen durch mindestens eine mit einem Langloch (12) versehene, verschiebbare Dichtlamelle (11) abgedichtet ist, die zwischen dem Abdeckprofil (3) und einem Absatz (23) des Grundprofils (1) und dem Pedalträgerarm (3) angeordnet ist.

6. Tretkurbel nach Anspruch 5, dadurch gekennzeichnet, daß die zum Langloch (7) im Abdeckprofil (3) zeigende Fläche des Pedalträgerarms (2) als ebene Fläche in der gleichen Höhe wie der Absatz (23) des Grundprofils (1) liegt und zusammen mit diesem eine Abdichtfläche für die Dichtlamelle (11) bildet.

7. Tretkurbel nach den Ansprüchen 2 und 5, dadurch gekennzeichnet, daß der Innenraum im Abdeckprofil (3) unter der Tretkurbelnuß (8) freigehalten ist und daß die Dichtlamelle (11) bis in diesen Bereich unter der Tretkurbelnuß verschiebbar ist.

8. Tretkurbel für einen Tretkurbelantrieb für Fahrräder oder dergleichen, insbesondere nach einem oder mehreren der Ansprüche 1 bis 7, bestehend aus einem Kurbelarm und einem Pedalträgerarm, die mit Kugellaufbahnen versehen und mit entsprechender Kugelfüllung verschiebbar gegeneinander gelagert und mittels eines am Pedalträgerarm angeordneten Steuerzapfens zur Verstellung der wirksamen Tretkurbellänge im Verlaufe des Trethubes gegeneinander verschiebbar sind, dadurch gekennzeichnet, daß die zwischen den Kugellaufbahnen (6, 6a) des Kurbelarms (52) und des Pedalträgerarms (2) angeordneten Kugeln (10) mittels eines Kugelkäfigs (80) in Längsrichtung der Tretkurbel (51) geführt sind und daß der Kugelkäfig (80) durch eine Fixiervorrichtung in Längsrichtung in einem bestimmten Bereich der Kugellaufbahn (6, 6a) gehalten wird.

9. Tretkurbel nach Anspruch 8, dadurch gekennzeichnet, daß der Kugelkäfig (80) sich über je eine Druckfeder (16) zwischen zwei Endanschlägen am Pedalträgerarm (2) abstützt und eine den verschiedenen Auszügen des Pedalträgerarms (2) aufgrund der auftretenden Federkräfte entsprechende Gleichgewichtslage einnimmt.

10. Tretkurbel nach Anspruch 9, dadurch gekennzeichnet, daß der Pedalträgerarm (2) mit einer als Sackloch ausgebildeten Längsbohrung (13) versehen ist, die mit einem Längsschlitz (14) und am anderen Ende mit einem Verschlußstück (82) versehen ist, daß in dieser Längsbohrung (13) zwischen zwei Druckfedern (16) ein Führungsstift (15) gelagert ist und daß ein an dem Führungsstift angeordneter Führungszapfen (81) durch den Längsschlitz (14) in eine Ausnehmung (17) am Kugelkäfig (80) eingreift.

11. Tretkurbeltrieb für Fahrräder o. dgl. mit aus zwei gegeneinander verschiebbaren Teilen (Kurbelarm und Pedalträgerarm) bestehenden Tretkurbeln, insbesondere nach einem oder mehreren der Ansprüche 1 bis 10, welcher Pedalträgerarm mittels eines Steuerzapfens gegenüber dem Kurbelarm derart verschoben wird, daß die Länge der Tretkurbel beim Abwärtsbewegen verlängert und beim Aufwärtsbewegen verkürzt wird, mit einer exzentrisch zur Tretkurbelachse angeordneten Lageranordnung, deren feststehendes Lagerteil am Rahmen angeordnet ist und deren drehbares Lagerteil beim Umlauf bewirkt, daß der Steuerzapfen eine gegenüber der Tretkurbelachse exzentrische Kreisbahn beschreibt, dadurch gekennzeichnet, daß die Lageranordnung (83) aus mindestens drei auf dem drehbaren Lagerteil (30) gelagerten Lagerrollen (33) besteht, die radial auf einer Lagerbahn (31) des feststehenden Lagerteils (29) abrollen, und daß der Steuerzapfen (25) an dem Kurbelarm (52) angeordnet und in einer auf dem drehbaren Lagerteil (30) angeordneten Lagerbuchse (34) im Freiraum (35) zwischen den Lagerrollen (33) etwa in der gleichen Ebene gelagert ist.

12. Tretkurbeltrieb nach Anspruch 11, dadurch gekennzeichnet, daß die Lagerrollen (33) als Kugellager ausgebildet sind.

13. Tretkurbeltrieb nach Anspruch 11 oder 12, dadurch gekennzeichnet, daß das feststehende Lagerteil (29) mit einer äußeren nutförmigen Lagerbahn (31) versehen ist, in die die Lagerrollen (33) von außen eingreifen und auf dieser abrollen.

14. Tretkurbeltrieb nach einem oder mehreren der Ansprüche 11 bis 13, dadurch gekennzeichnet, daß das feststehende Lagerteil (57, 29) und das drehbare Lagerteil (56, 30) gegeneinander staubdicht abgedichtet sind.

15. Tretkurbeltrieb nach einem oder mehreren der Ansprüche 11 bis 13, dadurch gekennzeichnet, daß der Steuerzapfen (25) in dem drehbaren Lagerteil (56, 30) der Lageranordnung (54, 83) um seine Achse drehbar, in allen anderen Ebenen jedoch abgestützt ist.

16. Tretkurbeltrieb nach einem oder mehreren der Ansprüche 11 bis 13, dadurch gekennzeichnet, daß im Pedalträgerarm (2) mehrere Bohrungen (58) in verschiedenen Abständen von der Pedalachse (53) angeordnet sind, in deren eine der Steuerzapfen (25) zur Auswahl des Leistungsverhaltens wahlweise einschraubbar ist.

17. Halterung zur Befestigung der Lageranordnungen zweier Tretkurbeltriebe nach einem oder mehreren der Ansprüche 11 bis 16 auf beiden Seiten eines Tretlagers eines Fahrradrahmens (61) o. dgl., gekennzeichnet, durch zwei an den feststehenden Lagerteilen der Lageranordnungen befestigte Trägerscheiben (39, 39a) mit je einer Ausnehmung (60, 62), die formschlüssig auf beide Enden des Tretlagerrohrs (40) zur Fixierung in radialer Richtung aufgesteckt sind; und eine an dem Rahmen (61) und an den beiden Trägerscheiben (39, 39a) befestigte Schellenanordnung (42, 41) zur axialen Fixierung der Trägerscheiben.

18. Halterung nach Anspruch 17, dadurch gekennzeichnet, daß die Schellenanordnung aus einem mit einem Befestigungsblech (77) für eine Fahrradstütze verschraubten ersten Teil (42) mit einem Stehbolzen (67) sowie einem über ein Langloch (71) an dem Stehbolzen (67) mit dem ersten Teil verschraubten zweiten Teil (41) besteht, an dem die beiden Trägerscheiben (39, 39a) befestigt sind.

19. Halterung nach Anspruch 17 oder 18, dadurch gekennzeichnet, daß eine der beiden Trägerscheiben den inneren Teil (39a) eines Kettenschutzkastens (39a, 64) bildet, mit dem der äußere Teil (64) des Kettenschutzkastens verschraubt ist und die Lageranordnung dieser Seite trägt.

20. Halterung nach Anspruch 19, dadurch gekennzeichnet, daß die Schellenanordnung (42, 41) mehrere, das Kettenrad (63) umgreifende Haltearme (70) aufweist, an denen das äußere Teil (42) des Kettenschutzkastens sowie die Lageranordnung dieser Seite befestigt sind.

## Claims

1. A pedal crank for a pedal crank drive for bicycles or the like, consisting of a crank arm and a pedalcarrier arm which by means of a control stud arranged on the pedal-carrier arm may during the course of the driving stroke be shifted with respect to one another for the adjustment of the effective length of pedal crank, the said crank arm consisting of an essentially U-shaped basic profile having ball raceways arranged on the inside of both limbs and the said pedal-carrier arm on two sides lying opposite one another being provided with ball raceways and being supported by a corresponding filling of balls to be able to shift in the crank arm, the open areas of the crank arm being closed off by cover means, characterized in that the basic profile (1) of the crank arm (52) on the outside of the limbs of the U exhibits longitudinal grooves (9) continuous over the whole length and the covering profile (3) is made with an essentially U-shaped continuous profile having reentrant limbs (27), that the covering profile (3) is inserted with its limbs (27) in the longitudinal grooves (9) in the basic profile, is pushed onto the basic profile (1) in the longitudinal direction and the two parts are connected indissolubly together, that the covering profile (3) on the side of the crank arm (52) is provided with an elongated hole (7) for bringing out the control stud (25) and that the ends of the crank arm (52) are closed off by endcaps (5, 20).

2. A pedal crank as in Claim 1, characterized in that on the outside of the covering profile (3) a pedal crank boss (8) is welded or soldered for mounting on a bottom bracket bearing axle.

3. A pedal crank as in Claim 1, characterized in that a sealing cap (4) is provided, the sealing region (20) of which may be slid onto the end of the basic profile (1) pointing to the pedal-carrier arm (2), and that a tongue (36) from the sealing cap (4) is led round the basic profile (1) in a further longitudinal groove (26) in the latter and is provided at the other end with an anglepiece (28) to which may be screwed a cover (5) sealing the other end of the basic profile (1).

4. A pedal crank as in Claim 3, characterized in that the opening in the sealing region (20) of the sealing cap (4) is adapted to the profile of the pedal-carrier arm (2) and is provided with a seal.

5. A pedal crank as in one or more of the preceding Claims, characterized in that the elongated hole (7) in the covering profile (3) is sealed from the inside by at least one slidable sealing-blade (11) which is provided with an elongated hole (12) and which is arranged between the covering profile (3) and a recess (23) in the basic profile (1) and the pedal-carrier arm (2).

6. A pedal crank as in Claim 5, characterized in that the area of the pedal-carrier arm (2) showing at the elongated hole (7) in the covering profile (3) lies as a plane area at the same level as the recess (23) in the basic profile (1) and together with it forms a sealing area for the sealing-blade (11).

7. A pedal crank as in Claims 2 and 5, characterized in that the interior of the covering profile (3) under the pedal crank boss (8) is kept free, and that the sealing-blade (11) may be slid as far as into this region under the pedal crank boss.

8. A pedal crank for a pedal crank drive for bicycles or the like, as in one or more of the Claims 1 to 7, consisting of a crank arm and a pedal-carrier arm which are provided with ball raceways and are supported to be able to shift with respect to one another by a corresponding filling of balls, and by means of a control stud arranged on the pedal-carrier arm may during the course of the driving stroke be shifted with respect to one another for the adjustment of the effective length of pedal crank, characterized in that the balls (10) arranged between the ball raceways (6, 6a) on the crank arm (52) and on the pedal-carrier arm (2) are guided by means of a ball cage (80) in the direction longitudinal to the pedal crank (51) and that by a locating device the ball cage (80) is kept in the longitudinal direction within a certain range of the ball raceway (6, 6a).

9. A pedal crank as in Claim 8, characterized in that the ball cage (80) via a pair of compression springs (16) bears against stops at each end of the pedal-carrier arm (2) and by reason of spring forces arising adopts a position of equilibrium to correspond with the different extensions of the pedal-carrier arm (2).

10. A pedal crank as in Claim 9, characterized in that the pedal-carrier arm (2) is provided with a blind hole (13) drilled longitudinally, which is provided with a longitudinal slot (14) and at the other with a stopper (82), that in this longitudinal drilled hole (13) a guidepin (15) is supported between compression springs (16), and that a guide-stud (81) arranged on the guidepin engages through the longitudinal slot (14) in a recess (17) in the ball cage (80).

11. A pedal crank gear for bicycles or the like, having pedal cranks consisting of two parts (crank arm and pedal-carrier arm) able to shift with respect to one another, as in one or more of the Claims 1 to 10, the said pedal-carrier arm being shifted with respect to the crank arm by means of a control stud in such a way that the length of the pedal crank becomes lengthened during the downwards movement and shortened during the upwards movement by a bearing arrangement arranged eccentrically with respect to the axis of the pedal crank, the stationary bearing portion of it being arranged on the frame and the rotatable bearing portion having during the revolution the effect that the control stud describes a circular path eccentric with respect to the axis of the pedal crank, characterized in that the bearing arrangement (83) consists of at least three bearing rollers (33) which are supported on the rotatable bearing portion (30) and ride radially on a bearing race (31) on the stationary bearing portion (29), and that the control stud (25) is arranged on the crank arm (52) and is supported in a bearing bush (34) arranged on the rotatable bearing portion (30) in the free space (35) between the bearing rollers (33) in approximately the same plane.

12. A pedal crank gear as in Claim 11, characterized in that the bearing rollers (33) are made as ball bearings.

13. A pedal crank gear as in one of the Claims 11 or 12, characterized in that the stationary bearing portion (29) is provided with an outer bearing race (31) in the form of a groove in which the bearing rollers (33) engage from outside and ride along it.

14. A pedal crank gear as in one or more of the Claims 11 to 13, characterized in that the stationary bearing portion (57, 29) and the rotatable bearing portion (56, 30) are sealed with respect to one another to be dusttight.

15. A pedal crank gear as in one or more of the preceding Claims, characterized in that the control stud (25) is able to turn about its axis in the rotatable bearing portion (56, 30) of the bearing arrangement (54, 83), but is supported in every other plane.

16. A pedal crank gear as in one or more of the prededing Claims, characterized in that a number of drilled holes (58) are arranged in the pedal-carrier arm (2) at different distances from the axis (53) of the pedal, into one of which the control stud (25) may be screwed at option for the selection of the power ratio.

17. A mounting for the fastening of the bearing arrangements of two pedal crank gears as in one or more of the Claims 11 to 16 on opposite sides of a bottom bracket bearing of a bicycle frame (61) or the like, characterized by two carrier discs (39, 39a) fastened to the stationary bearing portions of the bearing arrangements and each having a cut-out (60, 62) which is pushed with a close fit onto the respective end of the bottom bracket bearing tube (40) for location in the radial direction, and a clamp arrangement (42, 41) fastened to the frame (61) and to the two carrier discs (39, 39a) for the axial location of the carrier discs.

. 18. A mounting as in Claim 17, characterized in that the clamp arrangement consists of a first part (42) screwed to a mounting plate (77) for a bicycle rest and having a stud bolt (67), as well as a second part (41) which is screwed to the first part via an oblong hole (71) on the stud bolt (67) and to which the two carrier discs (39, 39a) are fastened.

19. A mounting as in Claim 17 or 18, characterized in that one of the two carrier discs forms the inner part (39a) of a chain case (39a, 64) to which the outer part (64) of the chain case is screwed and carries the bearing arrangement at this side.

20. A mounting as in Claim 19, characterized in that the clamp arrangement (42, 41) exhibits a number of brackets (70) embracing the sprocket wheel (63), to which the outer part (42) of the chain case as well as the bearing arrangement at this side are fastened.

**Revendications**

1. Manivelle de pédalier pour commande d'entraînement à pédalier de bicyclette ou similaire, constituée d'un bras de manivelle et d'un bras porte-pédale qui, au moyen d'une broche de commande disposée sur le bras porte-pédale, peuvent coulisser l'un par rapport à l'autre pour régler la longueur efficace de la manivelle de pédalier au cours de la course de pédalage, le bras de manivelle étant constitué d'un profilé de base essentiellement en forme de U avec des pistes de roulement de billes disposées intérieurement dans ses deux branches, le bras porte-pédale étant muni de pistes de roulement de billes sur deux côtés opposés et étant monté pour coulisser dans le bras de manivelle au moyen de billes de garniture appropriées, les surfaces ouvertes du bras de manivelle étant recouvertes par des moyens de recouvrement, caractérisée en ce que le profilé de base (1) du bras de manivelle (52) présente des rainures longitudinales (9) continues sur toute la longueur des faces extérieures des branches du U, le profilé de recouvrement (3) présentant un profil continu essentiellement en forme de U avec des branches rabattues (27), en ce que le profilé de recouvrement (3) est engagé par ses branches (27) dans les rainures longitudinales (9) du profilé de base, déplacé en direction longitudinale sur ce profilé de base (1) et les deux éléments sont assemblés entre eux de façon inamovible, en ce que le profilé de recouvrement (3), est muni du côté du bras de manivelle (52) d'un trou oblong (7) pour le passage à l'extérieur de la broche de commande (25) et en ce que les extrémités du bras de manivelle (52) sont fermées par des capuchons d'extrémité (5, 20).

2. Manivelle de pédalier selon la revendication 1, caractérisée en ce qu'un téton de manivelle (8) s'engageant sur un axe de pédalier est soudé ou brasé sur la surface extérieure du profilé de recouvrement (3).

3. Manivelle de pédalier selon la revendication 1, caractérisée en ce qu'il est prévu un capot d'étanchéité (4) dont la partie d'étanchéité (20) peut être engagée sur la partie du profilé de base (1) dirigée vers le bras porte-pédale (2), en ce qu'une patte (36) du capuchon d'étanchéité (4) est engagée dans une autre rainure longitudinale (26) du profilé de base (1), est rabattue sur celui-ci et est munie à l'autre extrémité d'une partie repliée (28) sur laquelle un couvercle (5), assurant l'étanchéité de l'autre extrémité du profilé de base (1), peut être fixé par vis.

4. Manivelle de pédalier selon la revendication 3, caractérisée en ce que l'ouverture de la partie d'étanchéité (20) du capot d'étanchéité (4) est adaptée au profil du bras porte-pédale (2) et est munie d'un joint d'étanchéité.

5. Manivelle de pédalier selon l'une ou plusieurs des revendications précédentes, caractérisée en ce que le trou oblong (7) du profilé de recouvrement (3) est rendu étanche de l'intérieur par au moins une lamelle d'étanchéité coulissante (11) munie d'un trou oblong (12), cette lamelle étant disposée entre le profilé de recouvrement (3) et un épaulement (23) du profilé de base (1) ainsi que le bras porte-pédale (2).

6. Manivelle de pédalier selon la revendication 5, caractérisée en ce que la surface du bras porte-pédale (2), dirigé vers le trou oblong (7) du profilé de recouvrement (3), est une surface plane située au même niveau que l'épaulement (23) du profilé de base (1) et forme, conjointement avec celui-ci, une surface d'étanchéité pour la lamelle d'étanchéité (11).

7. Manivelle de pédalier selon les revendications 2 et 5, caractérisée en ce que le volume intérieur du profilé de recouvrement (3) est maintenu libre sous le téton de manivelle (8) et en ce que la lamelle d'étanchéité (11) peut coulisser sous le téton de manivelle jusque dans cette zone.

8. Manivelle de pédalier pour commande d'entraînement à pédalier de bicyclette ou similaire selon l'une ou plusieurs des revendications 1 à 7, constituée d'un bras de manivelle et d'un bras porte-pédale, munis de pistes de roulement de billes et de billes de garniture correspondantes en étant montés pour coulisser l'un par rapport à l'autre, et pouvant, au moyen d'une broche de commande disposée sur le bras porte-pédale, être déplacés par coulissement l'un par rapport à l'autre pour régler la longueur efficace de la manivelle de pédalier au cours de la course de pédalage, caractérisée en ce que les billes (10) disposées entre les pistes de roulement de billes (6, 6a) du bras de manivelle (52) et du bras porte-pédale (2) sont guidées au moyen d'une cage à billes (80) dans la direction longitudinale de la manivelle (51) et en ce que la cage à billes (80) est maintenue par un dispositif de fixation, en direction longitudinale, dans une zone déterminée des pistes de roulement de billes (6, 6a).

9. Manivelle de pédalier selon la revendication 8, caractérisée en ce que la cage à billes (80) s'appuie, chaque fois par l'intermédiaire d'un ressort de compression (16), entre deux butées d'extrémité du bras porte-pédale (2) et prend une position d'équilibre correspondant aux différentes courses du bras porte-pédale (2) en fonction des forces développées par les ressorts.

10. Manivelle de pédalier selon la revendication 9, caractérisée en ce que le bras porte-pédale (2) est muni d'un alésage longitudinal (13) constitué sous forme de trou borgne, cet alésage étant formé avec une fente longitudinale (14) et à l'autre extrémité avec une pièce de fermeture (82), en ce qu'une tige de guidage (15) est montée dans cet alésage longitudinal (13) entre deux ressorts de compression (16) et en ce qu'un tenon de guidage (81) disposé sur la tige de guidage s'engage, en traversant la fente longitudinale (14), dans un évidement (17) de la cage à billes (80).

11. Commande d'entraînement à manivelle de pédalier pour bicyclette ou similaire, comportant des manivelles de pédalier constituées de deux éléments (bras de manivelle et bras porte-pédale) coulissant l'un par rapport à l'autre selon l'une ou plusieurs des revendications 1 à 10, ce bras porte-pédale étant déplacé par rapport au bras de manivelle, au moyen d'une broche de commande, de manière que la longueur de la manivelle de pédalier soit allongée lors du mouvement descendant et raccourcie lors du mouvement ascendant, avec un dispositif à palier à disposition excentrée par rapport à l'axe de manivelle, l'élément de palier fixe de ce dispositif étant disposé sur le cadre, tandis que l'élément de palier tournant agit pour que, lors de la rotation, la broche de commande décrive une trajectoire circulaire excentrée par rapport à l'axe de manivelle, caractérisée en ce que le dispositif à palier (83) se compose d'au moins trois galets de roulement (33) montés sur l'élément de palier tournant (30) et qui roulent sur une piste de roulement circulaire (31) de l'élément de palier fixe (29), et en ce que la broche de commande (25) est disposée sur le bras de manivelle (52) et est montée dans un coussinet (34) disposé sur l'élément de palier tournant (30), dans l'espace libre (35) entre les galets de roulement (33), sensiblement dans le même plan.

12. Commande d'entraînement à pédalier selon la revendication 11, caractérisée en ce que les galets de roulement (33) sont constitués sous forme de roulements à billes.

13. Commande d'entraînement à pédalier selon l'une des revendications 11 ou 12, caractérisée en ce que l'élément de palier fixe (29) est muni d'une piste de roulement extérieure (31) en forme de rainure dans laquelle les galets de roulement (33) sont engagés de l'extérieur et sur laquelle ils roulent.

14. Commande d'entraînement à pédalier selon l'une ou plusieurs des revendications 11 à 13, caractérisée en ce que l'élément de palier fixe (57, 29) et l'élément de palier tournant (56, 30) sont rendus étanche à la poussière l'un par rapport à l'autre.

15. Commande d'entraînement à pédalier selon l'une ou plusieurs des revendications 11 à 14 précédentes, caractérisée en ce que la broche de commande (25) peut tourner autour de son axe dans l'élément de palier tournant (56, 30) du dispositif à palier (54, 83), en étant cependant butée dans tous les autres plans.

16. Commande d'entraînement à pédalier selon l'une ou plusieurs des revendications précédentes, caractérisée en ce que plusieurs alésages (38) sont disposés dans le bras porte-pédale (2) à des distances différentes de l'axe de pédale (53), la broche de commande (25) pouvant être vissée au choix dans l'un de ces alésages pour sélectionner l'allure de commande.

17. Dispositif de fixation des dispositifs à palier de deux commandes d'entraînement à pédalier selon l'une ou plusieurs des revendications 11 à 16 des deux côtés du palier de pédalier du cadre (61) d'une bicyclette ou similaire, caractérisé par deux flasques porteurs (39, 39a) fixés sur les éléments de palier fixes des dispositifs à palier, chaque flasque présentant un évidement (60, 62), ces flasques étant engagés en liaison géométrique sur les deux extrémités du tube (40) du palier de pédalier pour assurer la fixation en direction radiale, et un dispositif entretoise (42, 41) fixé sur le cadre (61) et sur les deux flasques porteurs (39, 39a) pour assurer la fixation des flasques porteurs en direction axiale.

18. Dispositif selon la revendication 17, caractérisé en ce que le dispositif entretoise se compose d'une première partie (42) fixée par vis sur une tôle de fixation (77) d'un appui de bicyclette et comportant un boulon (67), ainsi que d'une seconde partie (41) assemblée par vissage avec la première partie par le boulon (67) au moyen d'un trou oblong (71), les deux flasques porteurs (39, 39a) étant fixés sur cette seconde partie.

19. Dispositif selon la revendication 17 ou 18, caractérisé en ce que l'un des deux flasques porteurs (39a) constitue la partie intérieure (39a) d'un carter de protection de chaîne (39a, 64), avec laquelle la partie extérieure (64) du carter de protection de chaîne est fixée par vis et qui porte le dispositif à palier de ce côté.

20. Dispositif selon la revendication 19, caractérisé en ce que le dispositif entretoise (42, 41) comporte plusieurs bras de maintien (70) s'engageant sur la roue de pédalier (63), bras sur lesquels sont fixés la partie extérieure (42) du carter de protection de chaîne ainsi que le dispositif à palier de ce côté.

Fig. 1

Fig. 2

Fig. 3

Fig. 4

Fig. 5

EP 0 215 938 B1

Fig. 6a

Fig. 6b

Fig. 6c

Fig. 7a

Fig. 7b

Fig. 7c

Fig. 8a

Fig. 8b

Fig. 8c

Fig.9

Fig.10

EP 0 215 938 B1

Fig. 11

Fig. 12

Fig. 13

EP 0 215 938 B1

Fig. 14